# EUROPEAN PATENT APPLICATION

(11) **EP 1 318 670 A1**
(43) Date of publication of application: **11.06.2003**
(21) Application number: 02026967.6
(22) Date of filing: 04.12.2002
(51) Int. Cl.: H04N 5/235

(54) **Image pick-up device and portable electronic device**

(30) Priority: 07.12.2001 JP 2001374026
(71) Applicant: Seiko Precision Inc., Narashino-shi, Chiba-ken (JP)
(72) Inventor: Ito, Akira, Seiko Precision Inc., Narashino-shi, Chiba-ken (JP); Seki, Yoichi, Seiko Precision Inc., Narashino-shi, Chiba-ken (JP); Nakano, Yoichi, Seiko Precision Inc., Narashino-shi, Chiba-ken (JP); Okuyama, Hirobumi, Seiko Precision Inc., Narashino-shi, Chiba-ken (JP)
(74) Representative: Hoffmann, Eckart, Dipl.-Ing.

(57) **Abstract**

Described is how to save electric power of an image pick-up device while turning on a light so as to recognize an object to be photographed by a photographer even when a periphery is dark. During a period until a release switch (12) is operated, a control part (1) controls an LED (9) to emit light with the quantity of light not larger than that necessary for photographing a still image. When the release switch (12) is operated, the control part controls the LED (9) to emit light with the quantity of light necessary for photographing the still image.

## Description

The present invention relates to an image pick-up device, and more particularly to an image pick-up device capable of lighting an object to be photographed; the invention also relates to a portable electronic device such as a portable telephone incorporating such image pick-up device.

In recent years, digital still cameras using image sensors such as CCDs have been widely spread. Most of the digital still cameras display (through-photographing) images picked up by the image sensors in accordance with the on-setting of a camera operation on display parts such as LCDs. After a user recognizes the image displayed on the display part, the user presses a release button to photograph the image, so that the user photographs a composition intended by himself or herself.

The above-described way of use, which is not seen in a silver salt camera, is peculiar to the digital still camera.

The above-described manner of use may be desired when the periphery (surrounding) is light. However, when the periphery is dark, the display of a display part is too dark so that the above-described use can, disadvantageously, not be realized. In such a case, only the direct visual recognition of a photographer can be relied on. However, in this case, when the periphery is too dark, the photographer cannot visually recognize an object to be photographed. In order to overcome these problems, a light may be continuously turned on from the on-setting of the camera operation to the completion of a photographing operation, however, when the light is always continuously turned on with a luminance necessary for photographing, consumed electric power is inconveniently increased.

It is an object of the present invention to save the electric power of an image pick-up device in which a light is turned on so that a photographer can recognize an object to be photographed even when a periphery is dark.

This object is achieved by an image pick-up device as claimed in claim 1. Preferred embodiments of the invention are subject-matter of the dependent claims.

In accordance with the present invention as claimed in claim 1, the quantity of light necessary only for photographing the still image is applied when the still image is photographed, and before the still image is photographed, the light emitting part can emit a quantity of light not larger than that necessary for a photographer to recognize the object to be photographed. Thus, electric power can be saved compare to the case in which the quantity of light necessary for photographing the still image is always applied.

According to a particular embodiment of the invention as claimed in claim 2, the quantity of light of the light emitting part upon photographing the still image in response to the operation of the release switch can be increased relative to that during the period before, i.e., until the release switch is operated, in addition to the above-described effect.

A third invention concerns an image pick-up device further including a display part for performing a display corresponding to the image information outputted from the image pick-up part.

According to a particular embodiment of the invention as claimed in claim 3, even when the periphery is dark during a period until the release switch is operated, a photographer can recognize the image displayed on the display part in addition to the above-described effects. After the photographer recognizes the image, the photographer can press a release button to carry out a still image photographing operation.

According to a particular embodiment of the invention as claimed in claim 4, the structure can be made compact in addition to the above-described effects.

Now, a mode for carrying out the present invention will be described by referring to one embodiment shown in the drawings. In this embodiment, will be described an example in which an image pick-up device is provided in a portable telephone as a potable electronic device.
- Fig 1: is a functional block diagram showing one embodiment of the present invention.
- Fig 2: is a block diagram showing a CCD camera in Fig. 1.
- Fig. 3: is a front view showing an external appearance of the one embodiment of the present invention.
- Fig. 4: is a timing chart for explaining an operation of Fig. 1.
- Fig. 5: is a timing chart for explaining the operation of Fig. 1.

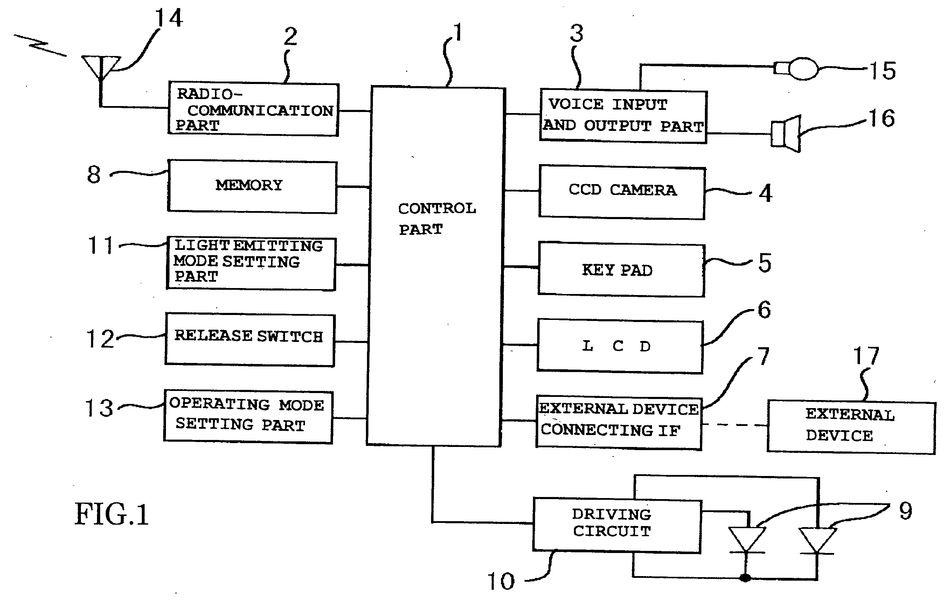

Fig. 1 shows an electric structure of the portable telephone in a functional block diagram. In the drawing, a control part 1 serving as a light quantity control part comprises a microcomputer including a CPU or the like as a main component, and a radio-communication part 2, a voice input and output part 3, a CCD camera 4 as an image pick-up part, a key pad 5, a color LCD 6 as a display part, an external device connecting interface 7, a memory 8, a driving circuit 10 for driving a white LED 9 as a light emitting part for applying light for lighting an object to be photographed, a light emitting mode setting part 11 for setting the light emitting mode of the LED 9, a release switch 12 for outputting a release signal for instructing a still image photographing operation to be started and an operating mode setting part 13 also serving as a power switch are connected thereto. An antenna 14 is connected to the radio-communication part 2. To the voice input and output part 3, a microphone 15 and a receiver 16 are connected.

When a transmitting voice is inputted, the microphone 15 converts the inputted transmitting voice into an electric signal from an acoustic signal to generate a voice transmitting signal and output the voice transmitting signal to the voice input and output part 3. When the voice transmitting signal is supplied to the voice input and output part 3 from the microphone 15, the voice input and output part 3 executes an amplifying process and an A/D conversion process or the like to the voice transmitting signal to output the voice transmitting signal to the radio-communication part 2 through the control part 1. When the voice transmitting signal is supplied to the radio-communication part 2 from the voice input and output part 3 through the control part 1, the radio-communication part 2 performs a base band process and a wireless process or the like to the voice transmitting signal and emits the transmitting radio wave of a communication frequency band of a broad band (for instance, a communication frequency band allocated to a radio-communication using a Code Division Multiple Access connection (CDMA) system) from the antenna 14.

When the antenna 14 catches a radio wave of the communication frequency band of the broad band as a receiving radio wave, the radio communication part 2 performs a radio process and a base band process or the like to the caught radio wave to generate a voice receiving signal and outputs the voice receiving signal to the voice input and output part 3 through the control part 1. When the voice receiving signal is supplied to the voice input and output part 3 from the radio -communication part 2 through the control part 1, the voice input and output part 3 executes a D/A conversion process and an amplifying process or the like to the supplied voice receiving signal to output the voice receiving signal to the receiver 16. The receiver 16 to which the voice receiving signal is supplied from the voice input and output part 3 converts the voice receiving signal into an acoustic signal from an electric signal to generate a receiving voice and outputs the generated receiving voice.

The CCD camera 4 picks-up the image of an object to be photographed to generate (what is called a photoelectric transfer) electric image information corresponding to the photographed image to output it to the control part 1.

The key pad 5 is composed of various kinds of arranged keys such as a speaking start key, a redial key, a speaking end key, numeric character keys including [0] to [9], a * (asterisk) key, a # (sharp) key and F (function) keys, etc. When any key is operated, a key operating signal corresponding to the operation of the key is outputted to the control part 1. When the key operating signal is supplied to the control part 1 from the key pad 5, the control part 1 decodes the key operating signal to perform a process corresponding to the decoded result.

When a display signal is supplied to the LCD 6 from the control part 1, the LCD 6 displays display information corresponding to the sent display signal. An external device 17 is a digital still camera or the like having a function for photographing image information like the CCD camera 4. The external device connecting interface 7 inputs the image information photographed by the external device 17 and outputs the inputted image information to the control part 1 under the condition that the portable telephone 1 is connected to the external device 17. The display part is not limited to a color LCD and may be suitably changed to an organic EL display, etc.

The memory 8 constituting control means in association with the control part 1 includes memory elements such as a flash memory, a ROM, a RAM, a VRAM (video RAM), etc. and stores executable programs in the ROM. The control part 1 reads the executable programs and performs processes to execute various types of operations as mentioned below. The flash memory in the memory 8 stores the image information inputted from the CCD camera 4 upon operation of the release switch 12 and the image information inputted from the external device connecting interface 7. The VRAM in the memory 8 stores the image information inputted from the CCD camera 4 and displayed on the LCD 6 or the image information inputted from the external device connecting interface 7. The RAM in the memory 8 is used for various kinds of processes.

The LED 9 as the light emitting part is an LED for lighting an object to be photographed. In this embodiment, a white LED for applying white light is employed. As the white LED, for instance, a high luminance white LED (model number:NSPW510BS) produced by Nichia Kagaku Kogyo Co.,Ltd. or the like is used. In Fig. 1, although an example using the two LEDs 9 is shown, the number of LEDs may be suitably changed. For example, since the quantity of light required for lighting is different depending on the detecting characteristics of a CCD (image sensor) used for the CCD camera 4, a change can be made in such a fashion that when the large quantity of light is necessary for lighting, the number of LEDs 9 is increased to increase the quantity of light, and when the large quantity of light for lighting is not necessary, a single LED is used.

The driving circuit 10 drives the LED 9 on the basis of a light quantity control signal for instructing the quantity of emitted light of the LED 9 outputted from the control part 1. Since the light quantity control signal outputted from the control part 1 may be information for designating the quantity of emitted light of the white LED 9, a control considering a white balance is not necessary, which is different from a case in which the quantity of light of the light emitting part for emitting white light is controlled by using the red LED, the green LED and the blue LED. Therefore, the light quantity control signal can be simplified.

The light emitting mode setting part 11 serves to set the light emitting mode of the LED 9. In this embodiment, an automatic light emitting mode for automatically controlling the light emission and the quantity of emitted light of the LED 9 depending on the luminance of an object to be photographed and a light emitting inhibit mode for inhibiting the light emission of the LED 9 can be set. For instance, the automatic light emitting mode and the light emitting inhibit mode are changed every one operation. The control part 1 controls the light emission of the LED 9 in accordance with the mode or the like set by the light emitting mode setting part 11 and displays the set mode on the LCD 6.

The operating mode setting part 13 can selectively set a state in which the power is turned off (off mode), a state in which the transmitting and receiving operations of a telephone can be carried out (telephone mode), a state (view mode) in which image information stored in the memory 8 is displayed, a state in which a photographing operation by a camera can be carried out (photographing mode) and a state in which the light of the LED (light emitting part) 9 is continuously emitted with a prescribed quantity of light (luminance) (light mode). For instance, the modes including the off mode, the telephone mode, the view mode, the photographing mode and the light mode are switched every one operation. The control part 1 controls various kinds of operations in accordance with the modes set by the operating mode setting part 13 and displays the set modes on the LCD 6. A telephone call can be received in all modes except the off mode.

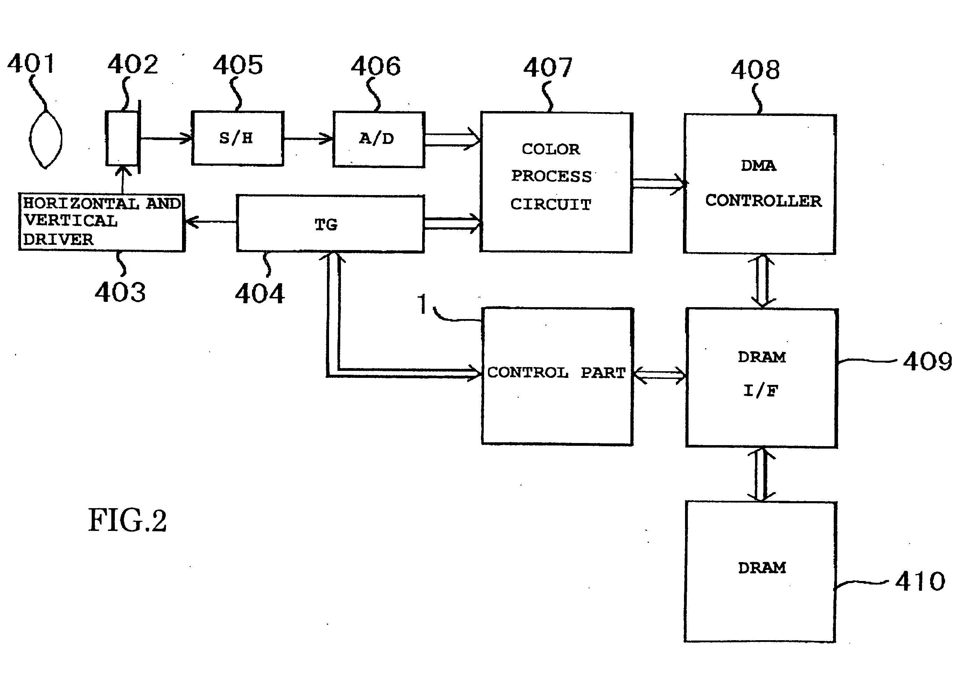

Fig. 2 is a block diagram showing the CCD camera 4 and the control part 1 and so on. In Fig. 2, a CCD 402 as an image pick-up element having a light receiving surface on which the optical image of an object to be photographed is formed by a photographing lens 401 is a solid state image pick-up element which performs a photoelectric transfer for outputting an analog signal corresponding to the optical image and transfers an electric charge in the form of an array. In this embodiment, the CCD 402 is used as what is called a solid state image sensor for converting two-dimensional optical information into an electric signal of time-series (serial row).

The CCD 402 is complementarily described below. The CCD 402 includes a photoelectric transfer part in which many photoelectric transfer elements are arranged in the form of an array and a charge storage part for storing the output charges of the photoelectric transfer elements and a charge reading part for reading the charges stored in the charge storage part in a prescribed system. Each of the photoelectric transfer elements forms a pixel. The CCD 402 in the present embodiment is a color CCD. Generally, since the pixel information itself of the CCD does not have color information, a color filter (a primary color filer using the three primary colors of light or a complementary color filter using the three primary colors of color) is mounted on the front surface of the color CCD.

A horizontal and vertical driver 403 and a timing generator (TG) 404 generate driving signals necessary for reading the CCD 402. Specifically, the horizontal and vertical driver and the timing generator generate driving signals for transferring (reading) the information of the pixels for each row, while sequentially designating each column of the CCD 402, that is, generate the horizontal and vertical driving signals respectively for serially reading out the pixel information.

A sample hold circuit 405 serves to sample the time series signal (in this step, an analog signal) read from the CCD 402 with a frequency adapted to the resolution of the CCD 402. After sampling, an automatic gain control (AGC) may be carried out.

An analog/digital converter 406 converts the sampled signal into a digital signal.

A color process circuit 407 generates a luminance/color difference multiplex signal (referred to as a "YUV signal", hereinafter.) as the image information from the output of the analog/digital converter 406.

A DMA controller 408 transfers data between the color process circuit 407 and a DRAM 410 (correctly stated, a DRAM interface 409) without involving the control part 1, and carries out a so-called direct memory transfer (DMA: DIRECT MEMORY ACCESS).

The DRAM interface 409 serves as a signal interface between the DRAM 410 and the DRAM controller 408 and as a signal interface between the DRAM 410 and the control part 1.

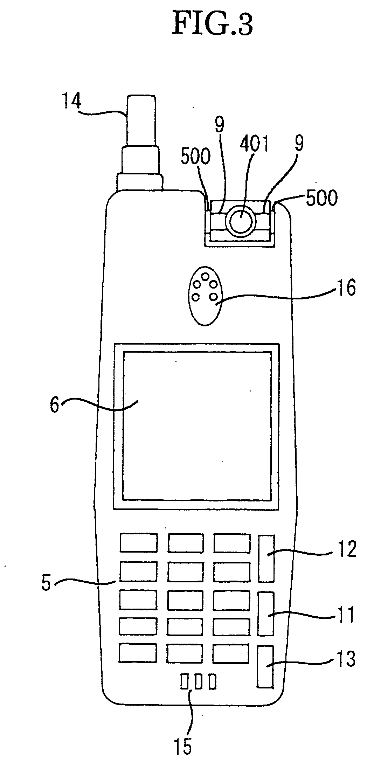

Fig. 3 is a view showing the external appearance of the portable telephone according to the present embodiment. In Fig. 3, components having the same structures as those of Fig. 1 are designated by the same reference numerals. The photographing lens 401, the CCD 402 and the LEDs 9 are integrally formed and capable of rotating about axes 500. Accordingly, a user himself or herself can be photographed by using the CCD camera 4. In such a manner, since the image pick-up device using the LED as the light emitting part is provided integrally with the portable telephone, noise can be more reduced, the form can be made more compact and the degree of freedom in design can be improved relative to that of the prior art using a xenon tube as a light emitting part. Further, since the white LED is used as the light emitting part, the structure can be simplified and the number of parts can be reduced as compared with that using , for instance, the red LED, the green LED and the blue LED are employed to emit white light.

Now, the operation will be described.

When the telephone mode is set in the operating mode setting part 13, the control part 1 allows the functions of the portable telephone using the radio-communication part 2, the voice input and output part 3, the antenna 14, the microphone 15 and the receiver 16 or the like to be operated and a user can use the portable telephone as an ordinary portable telephone.

When the view mode is set in the operating mode setting part 13, the control part 1 supplies a display signal corresponding to the image information stored in the memory 8 to the LCD 6 to display an image corresponding to the image information on the LCD 6.

When the light mode is set by the operating mode setting part 13, the control part 1 controls the LED 9 to emit light with a prescribed quantity of light (brightness). Accordingly, when the light mode is set, the portable telephone can be used as a lighting device. Further, as described below, since the LED (light emitting part) 9 used for photographing is also used for lighting, the structure can be simplified. Since the LED is used as the light emitting part, a more compact structure can be realized. In the light mode, the quantity of light of the LED 9 may be adjusted by operating the key pad 5.

When the photographing mode is set by the operating mode setting part, the control part 1 operates the CCD camera 4 to continuously fetch image information corresponding to the image of an object to be photographed which is taken in and outputted in real time by the CCD camera 4, sends the image information to LCD 6 through the VRAM or the like of the memory 8 and display it on the LCD 6. The user determines a composition while viewing the LCD 6 in this state. At this time, the control part 1 recognizes the setting in the light emitting mode setting part 11.

When an automatic light emitting mode is set by the light emitting mode setting part 11, the control part 1 controls the quantity of light applied from the LED 9 in accordance with the image information inputted from the CCD camera 4. Specifically, the control part 1 changes a light quantity control signal outputted to the driving circuit 10 in accordance with a luminance signal included in the image information inputted from the CCD camera 4 to control the quantity of light applied from the LED 9. Further stated, as the luminance signal shows a darker state, the control part 1 controls the quantity of light emitted by the LED 9 to be increased and so as to apply a stronger light. As one example, when the control part 1 decides that an image displayed on the LCD 6 in accordance with the luminance signal is lighter than a prescribed value 1, the control part 1 suppresses the lighting of the LED 9. When the control part 1 decides that the image displayed on the LCD 6 in accordance with the luminance signal is darker than the prescribed value 1 and lighter than a prescribed value 2 (in this case, it is assumed that the prescribed value 1 is higher in luminance than the prescribed value 2 and these values are previously stored in the memory 8.), the control part 1 controls the LED 9 to be turned on with a first quantity of light. When the control part 1 decides that the image displayed on the LCD 6 in accordance with the luminance signal is darker than the prescribed value 2, the control part 1 controls the LED 9 to be turned on with a second quantity of light larger than the first quantity of light.

In the above description, although the quantity of light of the LED 9 is controlled in three steps, the number of steps is not limited to the three steps and may be smaller or larger than the three steps in accordance with the image information (luminance signal).

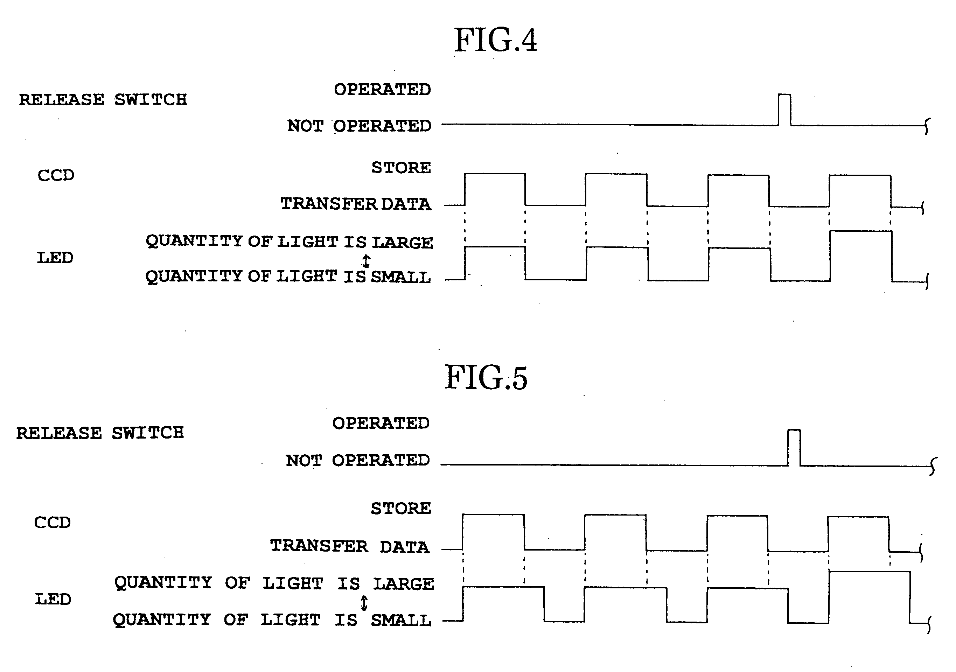

The light may be continuously emitted by the LED 9 in a state where the automatic light emitting mode is set under a photographing mode or the light may be emitted only during a period when the CCD 402 stores the electric charge except a period (during transfer of the charge) when the charge is read from the CCD 402 as shown in Fig. 4. The LED may be turned on in such a manner that the LED is turned off only during a part of a period (during transfer of the charge) when the charge is read from the CCD 402, as shown in Fig. 5. As shown in Fig. 4, if the LED (light emitting part) 9 is turned on only during the period when the CCD 402 stores the charge except the period during which the charge is read from the CCD 402, the LED 9 (light emitting part) can be prevented from operating when the CCD 402 does not detect an image of the object to be photographed. Accordingly, the emission of light unnecessary for detecting the image of the object to be photographed can be prevented to save electric power. Further, as shown in Fig. 5, if the LED is turned off only during a part of the period when the charge is read from the CCD 402, the unnecessary operation of the LED (light emitting part) 9 can be reduced and the electric power can be saved compare to the case in which the LED 9 is continuously turned on. Further, when the LED is turned off during a part of the period when the charge is read from the CCD 402, a flicker which may possibly give a discomfort to a person who receives light from the LED (light emitting part) 9 as an object to be photographed due to the intermittent light emission of the LED (light emitting part) 9 can be reduced compare to a case in which the light emission of the LED 9 is stopped during all the period when the charge is read from the CCD 402. In this embodiment, when the above-described light emission of the LED 9 is controlled, the control part 1 controls the light emitting timing of the LED 9 in accordance with the output of the timing generator 404 for regulating the reading timing of the CCD 402. In such a way, since the reading timing of the CCD 402 and the light emitting control timing of the LED 9 are controlled on the basis of a common output, the synchronization of timing can be easily obtained. Further, since the reading timing of the CCD 402 and the light emitting timing of the LED 9 are controlled on the basis of the common output, an output for determining the timing can be shared. During this time, that is, during a period until the release switch is operated, the quantity of light outputted from the LED 9 is set to a quantity of light not larger than the quantity of light required for photographing a still image by which a photographer can visually recognize a display by the LCD 6.

While a user changes the direction of the portable telephone or the CCD camera 4 under this state, that is, a state in which an image picked up by the CCD camera 4 is displayed on the LCD 6 substantially in real time (a through-photographing state), the user changes the composition of the image displayed on the LCD 6 and operates the release switch 12 when a desired composition is obtained to perform a still image photographing operation.

The control part 1 changes the quantity of light of the LED 9 from a state before the release switch 12 is operated in accordance with the operation of the release switch 12. Specifically, the control part 1 outputs to the driving circuit 10 a light quantity control signal to increase the quantity of light of the LED 9 immediately after the release switch 12 is operated, in other words, the quantity of light upon photographing the still image is increased relative to that before the release switch 12 is operated , specifically, a light quantity control signal for instructing the quantity of light necessary only for photographing the still image, to increase the quantity of light of the LED 9. In this case, the release switch 12 is a two-step switch. When the switch of a first- step is turned on in accordance with the operation of the release switch 12, the quantity of light of the LED 9 is increased relative to the quantity of light of the LED 9 during a period until the release switch is operated. When the switch of a second step is turned on in accordance with the subsequent operation of the release switch 12, a YUV signal stored in the DRAM 410 is fixed to perform the above-described processes.

As described above, when the still image is photographed in accordance with the operation of the release switch 12, the quantity of light which supplies a luminance necessary for photographing the still image can be generated from the LED (light emitting part) 9. In the case of a composition which is not intended by a user during a period until the release switch 12 is operated, the wasteful consumption of electric power due to the application of more light than necessary from the LED 9 can be avoided to save the electric power.

As control systems for the quantity of light, when a plurality of LEDs are provided, the number of LEDs 9 to be turned on may be changed or driving current supplied to the same LED may be controlled to be changed depending on the quantity of light. These systems may be combined together. In the case of the structure in which the quantity of light from the LED is controlled by changing the driving current supplied to the LED, the quantity of light can be controlled in the same LED. In the case of the structure in which the plural LEDs are provided and the quantity of light from the LEDs is controlled by changing the number of LEDs to be driven, the control of the quantity of light at least corresponding to the number of LEDs can be performed and the quantity of light can be increased compared to that in the case of a single LED.

When the quantity of light of the LED 9 is increased in accordance with the operation of the release switch 12, the control part 1 fixes the YUV signal stored in the DRAM 410 after the quantity of light of the LED 9 is increased, fetches the fixed YUV signal through the DRAM interface 409 and fixes the display of the LCD 6 to an image corresponding to the fixed YUV signal. The control part 1 applies, for instance, a JPEG encoding process to the fetched YUV signal, and then, stores the signal in the flash memory of the memory 8.

As described above, since the LED is used as the light emitting part for lighting an object to be photographed, the light emitting part can be made compact. Accordingly, the degree of freedom in design is improved. Further, since the LED is easily controlled to emit light differently from a xenon tube, the LED may be used as means except stroboscopic light upon photographing at dark time as usual. For instance, when a periphery is dark, the LED may be used for lighting an object to be photographed so that a user can recognize a composition. Accordingly, the maneuverability of the user is increased. Further, since the LED does not require voltage of several hundred V as driving voltage differently from the xenon tube, noise resulting from the high voltage can be reduced and a limitation in design due to the noise can be decreased more than before.

The control part 1 performs a control to raise the luminance of image information by increasing the quantity of light applied from the LED 9 when the luminance obtained from the image information outputted from the CCD camera 4 is low, or to lower the luminance of the image information by decreasing the quantity of light applied from the LED when the luminance obtained from the image information outputted from the CCD camera 4 is too high. Thus, the luminance of the image information is corrected.

Further, since the LCD 6 displays an image corresponding to the object to be photographed lighted by the LED 9, when the user determines a composition by viewing the display part (upon through-photographing), illuminating light can be applied thereto. Thus, even when a periphery is dark, the user can determine the composition by viewing the display part.

Further, since the light emitting part serves as auxiliary light upon through-photograph and as what is called stroboscopic light for photographing at the time of operation of the release switch, the structure can be simplified.

When the photographing mode is set by the operating mode setting part, if the light emitting inhibit mode is set by the light emitting mode setting part 11, the control part 1 controls the LED 9 not to emit light and carries out the above-described photographing operation.

In the above-description, although the CCD is employed as the image pick-up part, the present invention is not limited thereto and any of image sensor such as a CMOS sensor may be used.

In the above description, although an example in which the image pick-up device is formed integrally with the portable telephone as the portable electronic device is explained, the portable electronic device is not limited to the portable telephone. For instance, a so-called note type personal computer or a portable information terminal, etc. may be employed.

According to the present invention, since the quantity of light of the light emitting part is changed between a period until the release switch is operated and a moment when the still image is photographed in accordance with the operation of the release switch, the quantity of light necessary only for photographing the still image can be applied upon photographing the still image, and before the still image is photographed, the light emitting part may emit light with the quantity of light not larger than the quantity of light necessary for photographing by which a photographer can recognize the object to be photographed. Accordingly, electric power can be saved compare to a case in which the quantity of light necessary for photographing is always applied to the object to be photographed.

## Claims

1. An image pick-up device comprising:
a release switch (12) for instructing a still image to be photographed;
an image pick-up part (6) for picking up the image of an object to be photographed, updating and outputting image information corresponding to the picked-up image until the release switch (12) is operated and outputting an image signal corresponding to the image of said object which is picked up upon operation of the release switch (12) as still image information;
a light emitting part (9) for lighting said object; and a light quantity control part (1) for changing the quantity of light emitted by the light emitting part (9) between a first period until the release switch (12) is operated and a second period when the still image is photographed in response to the operation of the release switch (12), wherein the light quantity control part (1) is controlled to emit a first amount of light during said first period and a second amount of light during said second period, the first amount as well as the second amount being different from zero.

2. An image pick-up device according to claim 1, wherein the light quantity control part (1) allows the quantity of light of the light emitting part (9) in said second period to be increased relative to that during said first period.

3. An image pick-up device according to claim 1 or 2, further including a display part (6) for performing a display corresponding to the image information outputted from the image pick-up part (6).

4. An image pick-up device according to any one of claims 1 to 3, wherein the light emitting part (9) is an LED.

5. A portable electronic device equipped integrally with the image pick-up device according to any one of claims 1 to 4.
